# EUROPEAN PATENT APPLICATION

(11) **EP 3 869 424 A1**
(43) Date of publication of application: **25.08.2021**
(21) Application number: 18937354.1
(22) Date of filing: 25.12.2018
(51) Int. Cl.: G06Q 10/00

(54) **EQUIPMENT FAILURE DIAGNOSIS SUPPORT SYSTEM AND EQUIPMENT FAILURE DIAGNOSIS SUPPORT METHOD**

(30) Priority: 18.10.2018 JP 2018196911
(71) Applicant: Hitachi, Ltd., Tokyo 100-8280 (JP)
(72) Inventor: KUDO, Keiko, Tokyo 100-8280 (JP); NOGUCHI, Junji, Tokyo 100-8280 (JP)
(74) Representative: MERH-IP Matias Erny Reichl Hoffmann Patentanwälte PartG mbB
(86) International application number: PCT/JP2018/047455
(87) International publication number: WO 2020/079860

(57) **Abstract**

A learning diagnosis apparatus performs learning from failure data to create a diagnostic model, and stores a model, a failure cause part, and sensor data of the equipment in a rare case data table when the number of cases of the failure cause part of the equipment is less than a predetermined number. Then, based on the diagnostic model created by a learning unit, an estimated probability of causing a failure is calculated for each part of the equipment in which a failure has occurred. Based on the rare case data table, a sensor data match rate between sensor data of the equipment in which the failure has occurred and past sensor data of the model of the equipment is calculated. Then, the diagnosed failure cause part of the equipment in which the failure has occurred and the estimated probability are displayed, and the calculated sensor data match rate for each part of the equipment in which the failure has occurred is displayed.

## Description

### TECHNICAL FIELD

The present invention relates to an equipment failure diagnosis support system and an equipment failure diagnosis support method, and in particular, to an equipment failure diagnosis support system and an equipment failure diagnosis support method suitable for efficiently finding a failure location by shortening the time required for finding the failure location when inspecting the -failure location of a facility/equipment based on sensor data.

### BACKGROUND ART

In recent years, a system that performs equipment maintenance based on sensor data for measuring equipment, such as a production facility in a factory, using an information processing apparatus has been widely used.

In equipment maintenance using failure history information or maintenance history information, when a failure occurs, it is an important issue to efficiently find the location of the failure in a short time based on sensor data measured from the equipment and the failure history information or the maintenance history information.

For example, Patent Document 1 discloses a failure diagnosis apparatus that classifies failure states into categories and determines whether to display the failure state of a failure part in the upper category or display the failure state of a failure part in the lower category based on the number of failure states.

### CITATION LIST

### PATENT DOCUMENT

Patent Document 1: JP 2018-25928 A

### SUMMARY OF THE INVENTION

### PROBLEMS TO BE SOLVED BY THE INVENTION

The failure diagnosis apparatus described in Patent Document 1 classifies the failure states into categories, and displays the failure state of a failure part in the lower category when it is determined that the failure state can be used for the failure diagnosis and displays the failure state of a failure part in the upper category when it is determined that the failure state cannot be used for the failure diagnosis.

In the failure diagnosis apparatus described in Patent Document 1, when the maintenance history is sufficient, the failure state of a failure part in the lower category can be displayed and specific measures can be taken. However, when the maintenance history is not sufficient, only the failure state of a failure part in the upper category can be displayed, so that the maintenance staff cannot obtain sufficient information for failure diagnosis.

For this reason, this becomes a personal work to inspect and identify the failure location based on the person's experience or intuition. At that time, it takes a lot of time to inspect the specifications or past failure records.

In addition, there is known a technique of displaying a failure location together with an estimated probability based on machine learning. However, in rare cases where there are few past failure records, it is not possible to obtain highly accurate diagnosis results, and accordingly it is not possible to show a specific index as to what priority should be used to inspect the failure location. As a result, it takes a lot of time to inspect the failure location and take measures.

It is an object of the present invention to efficiently find a failure location by shortening the time required for finding the failure location when inspecting the failure location of a facility/equipment based on sensor data.

In addition, it is an object of the present invention to efficiently find a failure location by shortening the time required for finding the failure location by showing the priority regarding the inspection of the failure location even in a rare case.

### SOLUTIONS TO PROBLEMS

The configuration of an equipment failure diagnosis support system of the present invention is preferably an equipment failure diagnosis support system that performs failure diagnosis based on sensor data output from a sensor that measures equipment, and includes a learning diagnosis apparatus. The learning diagnosis apparatus holds a failure history table that stores equipment in which a failure has occurred, sensor data, and a failure cause part of the equipment and a rare case data table that stores sensor data for each model and each part in a rare case. The learning diagnosis apparatus includes a learning unit that performs learning from past data to create a diagnostic model, a diagnostic unit that performs failure diagnosis based on the diagnostic model created by the learning unit, and a display unit that displays a diagnosis result of the diagnostic unit. The learning unit performs learning from data stored in the failure history table to create a diagnostic model, and stores a model, a failure cause part, and sensor data of the equipment in the rare case data table when the number of cases of the failure cause part of the equipment is less than a predetermined number from the failure history table. The diagnostic unit calculates, for each part of the equipment in which the failure has occurred, an estimated probability of causing a failure based on the diagnostic model created by the learning unit, and calculates a sensor data match rate between sensor data of the equipment in which the failure has occurred and past sensor data of the model of the equipment based on the rare case data table. The display unit displays the failure cause part of the equipment in which the failure has occurred diagnosed by the diagnostic unit and the estimated probability, and displays the calculated sensor data match rate for each part of the equipment in which the failure has occurred.

### EFFECTS OF THE INVENTION

According to the present invention, when inspecting the failure location of a facility/equipment based on sensor data, it is possible to efficiently find the failure location by shortening the time required for finding the failure location. In addition, according to the present invention, even in a rare case, it is possible to show the priority regarding the inspection of a failure location. Therefore, it is possible to efficiently find the failure location by shortening the time required for finding the failure location.

### BRIEF DESCRIPTION OF THE DRAWINGS

Fig. 1 is a configuration diagram of an equipment failure diagnosis support system.
Fig. 2 is a hardware and software configuration diagram of an equipment information management apparatus.
Fig. 3 is a hardware and software configuration diagram of a learning diagnosis apparatus.
Fig. 4 is a diagram showing an example of a failure sensor data table.
Fig. 5 is a diagram showing an example of a maintenance history data table.
Fig. 6 is a diagram showing an example of a failure history data table.
Fig. 7 is a diagram showing an example of a diagnostic model table.
Fig. 8 is a diagram showing an example of a rare case data table.
Fig. 9 is a diagram showing an example of a model accuracy data table.
Fig. 10 is a diagram showing an example of an equipment number learning diagnosis result table.
Fig. 11 is a diagram showing an example of a rare case diagnosis result table.
Fig. 12 is a diagram showing an example of an occurrence frequency table for each target equipment.
Fig. 13 is a diagram for describing the diagnostic accuracy of learning diagnosis.
Fig. 14 is a flowchart showing a learning process performed by a learning unit.
Fig. 15 is a flowchart showing a diagnostic process performed by a diagnostic unit.
Fig. 16 is a flowchart showing a display process performed by a display unit.
Fig. 17 is a diagram showing an example of an estimation result display screen based on machine learning.
Fig. 18 is a diagram showing an example of a rare case sensor state information display screen.
Fig. 19 is a diagram showing an example of a past record display screen.
Fig. 20 is a diagram showing an example of a past record graph display screen.

### MODE FOR CARRYING OUT THE INVENTION

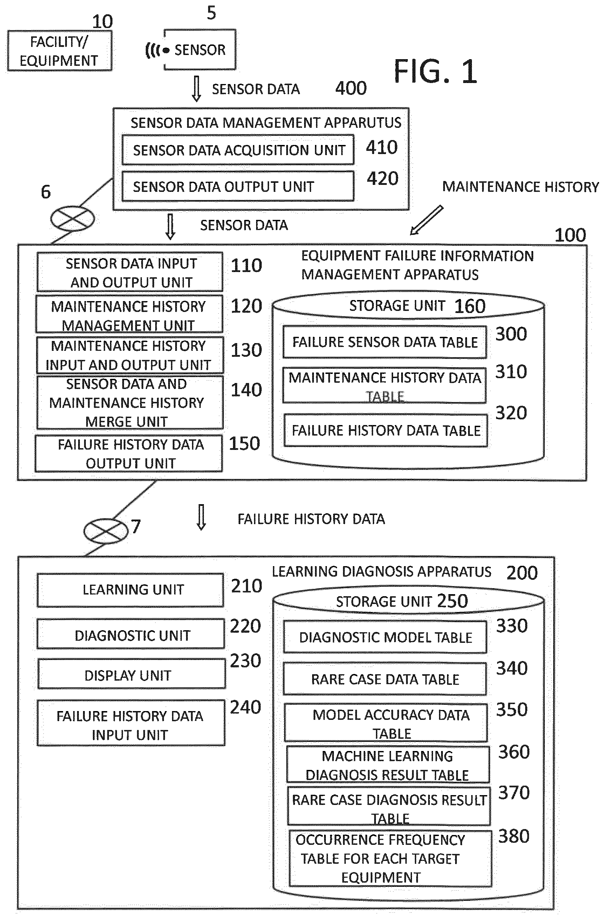

Hereinafter, an embodiment of the present invention will be described with reference to Figs. 1 to 20.

First, the configuration of an equipment failure diagnosis support system will be described with reference to Figs. 1 to 3.

As shown in Fig. 1, the equipment failure diagnosis support system includes a sensor 5, facility/equipment 10, a sensor data management apparatus 400, an equipment information management apparatus 100, and a learning diagnosis apparatus 200. The sensor data management apparatus 400 and the equipment information management apparatus 100 are connected to each other by a network 6, and connection with the learning diagnosis apparatus 200 is made by a network 7.

The facility/equipment 10 is equipment as a failure diagnosis target installed in a factory, an office, a hospital, a commercial facility, and the like. The sensor 5 is a device that detects information on the state of the facility/equipment 10, and is, for example, a temperature sensor, a speed sensor, or a position sensor. The sensor data management apparatus 400 is an apparatus that manages the data of the sensor 5. The equipment information management apparatus 100 is an apparatus that manages information, such as sensor data or maintenance history relevant to the facility/equipment 10. The learning diagnosis apparatus 200 is an apparatus that learns information, such as sensor data or maintenance history, and displays diagnostic information regarding a failure.

The sensor data management apparatus 400 includes a sensor data acquisition unit 410 and a failure data output unit 420.

The sensor data acquisition unit 410 is a functional unit that fetches sensor data from another storage device (not shown) or through a wired interface when the sensor data management apparatus 400 and the sensor 5 are connected to each other by wire. The sensor data output unit 420 is a functional unit that outputs the sensor data to the equipment information management apparatus 100.

The equipment information management apparatus 100 includes a sensor data input and output unit 110, a maintenance history management unit 120, a maintenance history input and output unit 130, a sensor data and maintenance history merge unit 140, a failure history data output unit 150, and a storage unit 160.

The sensor data input and output unit 110 fetches sensor data from the sensor data management apparatus 400 through the network 6 and displays the contents of the sensor data on the display device.

The maintenance history management unit 120 is a functional unit that manages the input maintenance history as a database. The maintenance history input and output unit 130 is a functional unit that inputs and outputs maintenance history. The maintenance history input and output unit 130 fetches sensor data using an input device or fetches the sensor data from another storage device (not shown), and outputs the maintenance history to the display device.

The sensor data and maintenance history merge unit 140 is a functional unit that creates a failure history data table (will be described later) by merging the sensor data at the time of equipment failure and the input maintenance history. The failure history data output unit 150 is a functional unit that outputs the data of the failure history data table to the learning diagnosis apparatus 200 through the network 7. The storage unit 160 is a functional unit that stores data used by the equipment information management apparatus 100.

The storage unit 160 holds a failure sensor data table 300, a maintenance history data table 310, and a failure history data table 320. In addition, the details of each data table will be described later.

The learning diagnosis apparatus 200 includes a learning unit 210, a diagnostic unit 220, a display unit 230, and a failure history data input unit 240.

The learning unit 210 is a functional unit that learns sensor data or maintenance history relevant to a facility/equipment and creates a learning model for failure diagnosis. Here, the learning model is a data model that is used as a reference for deriving an appropriate solution by deriving rules or relationships from the data set to be learned. The diagnostic unit 220 is a functional unit that performs an equipment failure diagnosis based on the learning model created by the learning unit 210 and the sensor data regarding the facility/equipment or the maintenance history. The display unit 230 is a functional unit that displays the result of the failure diagnosis of the diagnostic unit 220. The failure history data input unit 240 is a functional unit that fetches the failure history data table 320 through the network 7. A storage unit 250 is a functional unit that stores data used by the learning diagnosis apparatus 200.

The storage unit 250 holds a diagnostic model table 330, a rare case data table 340, a model accuracy data table 350, a machine learning diagnosis result table 360, a rare case diagnosis result table 370 and an occurrence frequency table for each target equipment 380. In addition, the details of each data table will be described later.

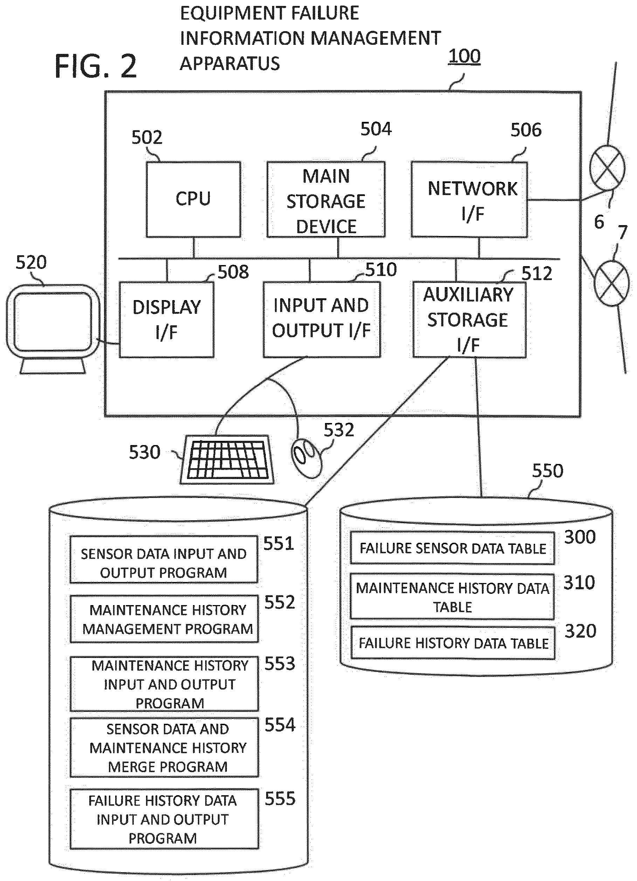

Next, the hardware and software configurations of an equipment failure information management apparatus will be described with reference to Fig. 2.

The- hardware configuration of the equipment information management apparatus 100 is realized by, for example, a general information processing apparatus, such as a personal computer shown in Fig. 2.

The equipment information management apparatus 100 has a form in which a CPU (Central Processing Unit) 502, a main storage device 504, a network I/F 506, a display I/F 508, an input and output I/F 510, and an auxiliary storage I/F 512 are connected to each other by a bus.

The CPU 202 controls each unit of the equipment information management apparatus 100 to load a required program to the main storage device 504 and execute the program.

The main storage device 504 is usually a volatile memory, such as a RAM, and stores a program executed by the CPU 502 and data to be referred to.

The network I/F 506 is an interface for making a connection to the network 6 and the network 7.

The display I/F 508 is an interface for making a connection to a display device 520, such as an LCD (Liquid Crystal Display).

The input and output I/F 510 is an interface for making a connection to input and output devices. In the example of Fig. 2, a keyboard 530 and a mouse 532 as a pointing device are connected.

The auxiliary storage I/F 512 is an interface for making a connection to an auxiliary storage device, such as an HDD (Hard Disk Drive) 550 or an SSD (Solid State Drive).

The HDD 550 has a large storage capacity, and stores a program for executing the present embodiment. A sensor data input and output program 551, a maintenance history management program 552, a maintenance history input and output program 553, a sensor data and maintenance history merge program 554, and a failure history data table output program 555 are installed in the HDD 550 of the equipment information management apparatus 100.

The sensor data input and output program 551, the maintenance history management program 552, the maintenance history input and output program 553, the sensor data and maintenance history merge program 554, and the failure history data table output program 555 are programs for executing the functions of the sensor data input and output unit 110, the maintenance history management unit 120, the maintenance history input and output unit 130, the sensor data and maintenance history merge unit 140, and the failure history data output unit 150, respectively.

In addition, the HDD 550 stores the failure sensor data table 300, the maintenance history data table 310, and the failure history data table 320.

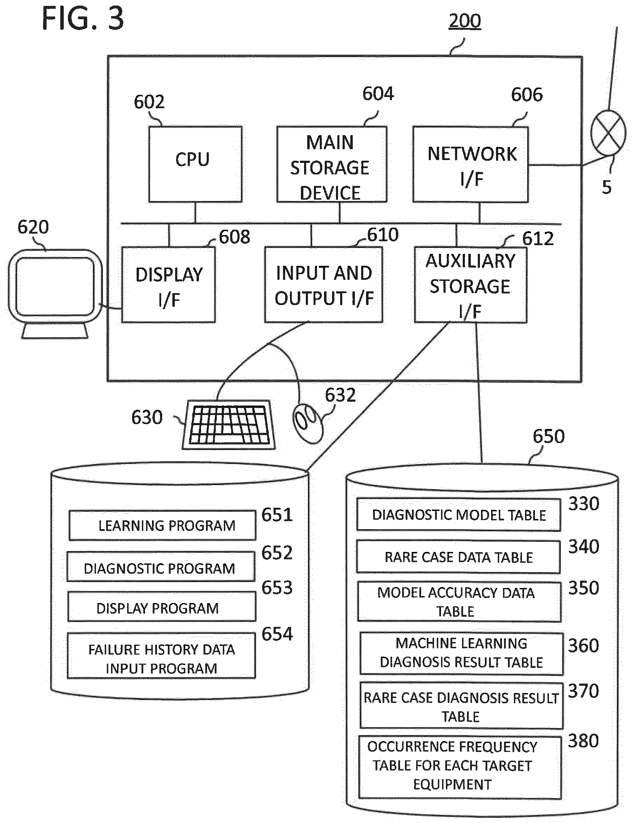

Next, the hardware and software configuration diagrams of a learning diagnosis apparatus will be described with reference to Fig. 3.

Similar to the equipment information management apparatus 100 shown in Fig. 2, the learning diagnosis apparatus 200 is also realized by a general information processing apparatus, such as a personal computer shown in Fig. 3, as a hardware configuration.

The components of the individual hardware are the same as those of the equipment information management apparatus 100 shown in Fig. 2.

In the case of the learning diagnosis apparatus 200, a learning program 651, a diagnostic program 652, a display program 653, and a failure history data table input program 654 are installed in an HDD 650.

The learning program 651, the diagnostic program 652, the display program 653, and the failure history data table input program 654 are programs for executing the functions of the learning unit 210, the diagnostic unit 220, the display unit 230, and the failure history data input unit 240, respectively.

In addition, the HDD 650 stores the diagnostic model table 330, the rare case data table 340, the model accuracy data table 350, the machine learning diagnosis result table 360, the rare case diagnosis result table 370, and the occurrence frequency table for each target equipment 380.

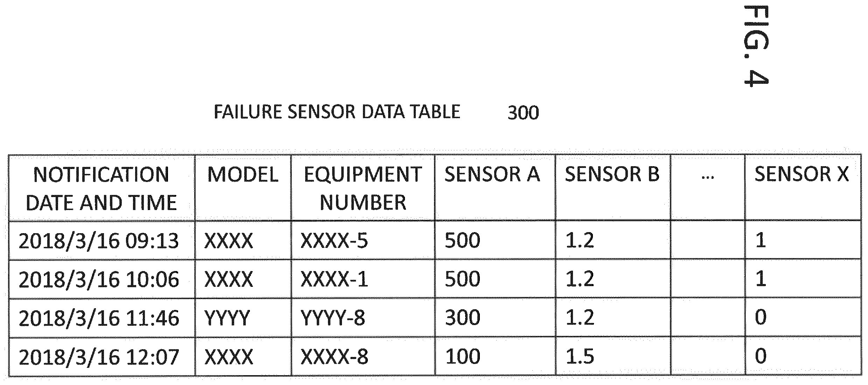

Next, a data structure used in the equipment failure diagnosis support system of the present embodiment will be described with reference to Figs. 4 to 13.

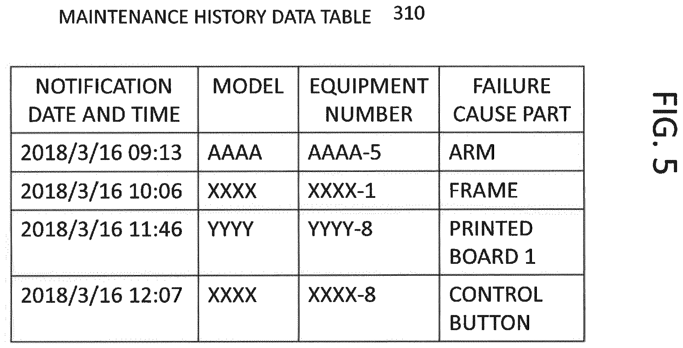

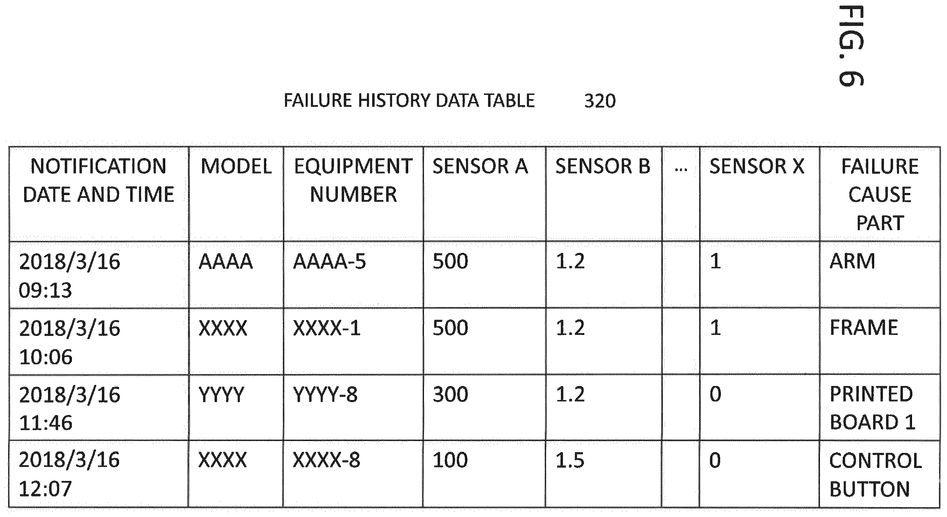

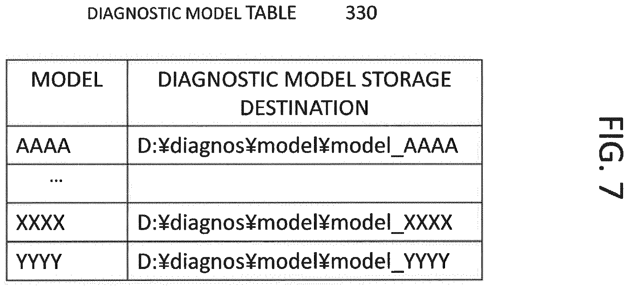

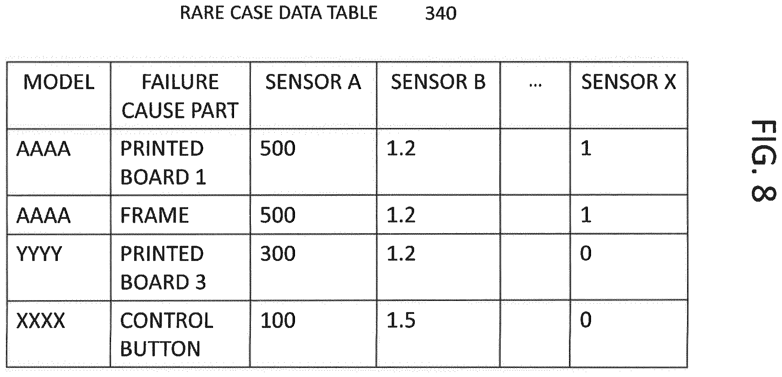

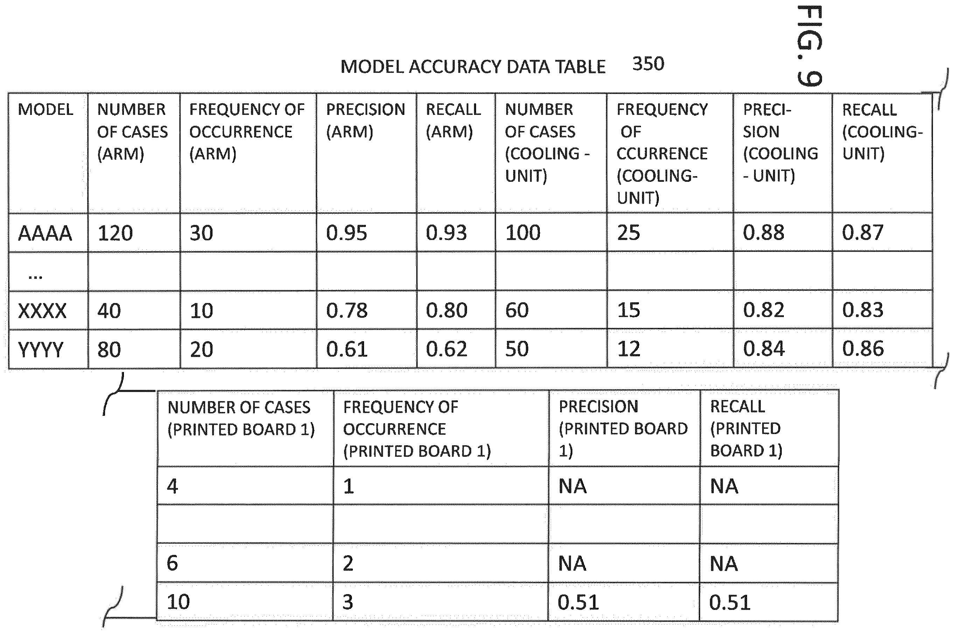

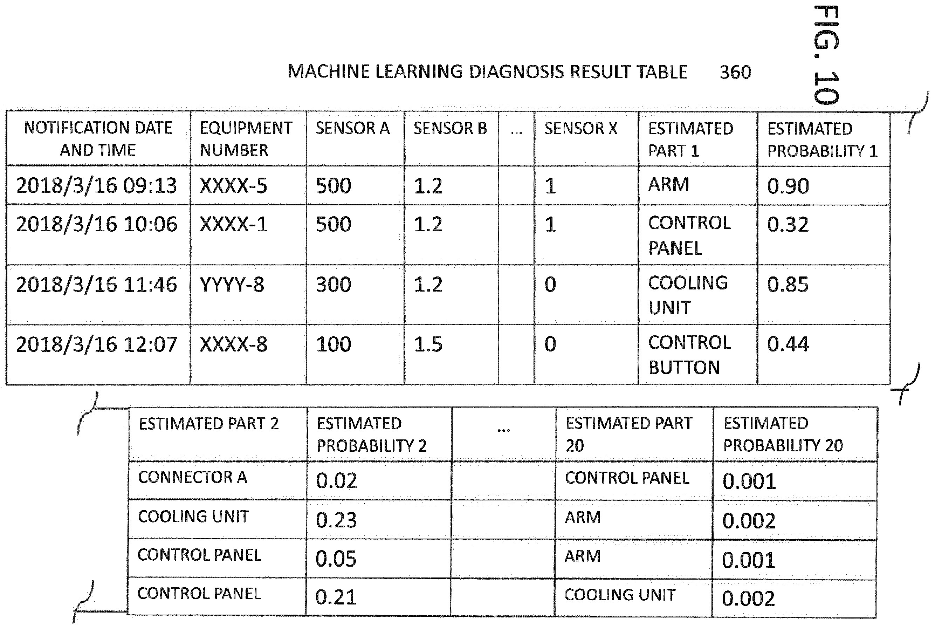

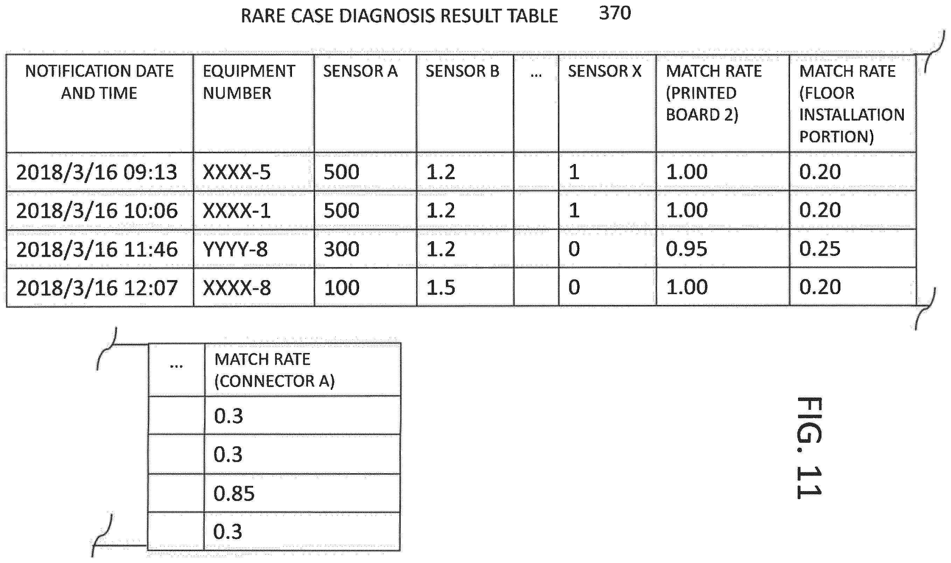

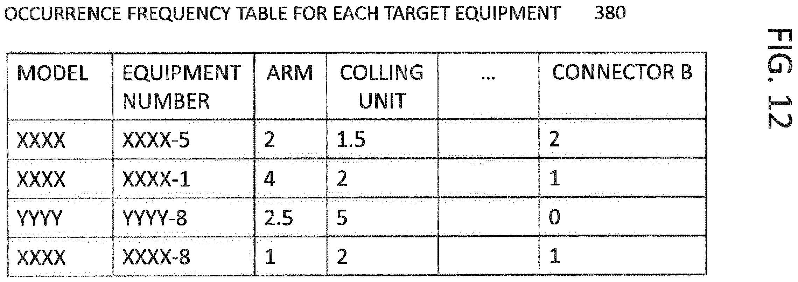

The failure sensor data table 300 of Fig. 4, the maintenance history data table 310 of Fig. 5, and the failure history data table 320 of Fig. 6 are tables relevant to data as a basis of learning diagnosis of failures of the facility/equipment 10. The diagnostic model table 330 of Fig. 7, the rare case data table 340 of Fig. 8, and the model accuracy data table 350 of Fig. 9 are tables relevant to data that is output as a learning result of the learning diagnosis apparatus 200. The machine learning diagnosis result table 360 of Fig. 10, the rare case diagnosis result table 370 of Fig. 11, and the occurrence frequency table for each target equipment 380 of Fig. 12 are tables relevant to data that is output as a diagnosis result of the learning diagnosis apparatus 200.

The failure sensor data table 300 is a table that stores sensor data at the time of failure of the facility/equipment 10, and has fields of notification date and time, model, equipment number, sensor A, ..., and sensor X as shown in Fig. 4.

The notification date and time is a field for storing the date and time when the failure occurrence is reported. The model is a field for storing an identifier indicating the type of equipment that has failed. The equipment number is a field for storing the number of equipment that has failed. The sensor A, ..., and the sensor X are fields for storing the respective sensor data values.

The maintenance history data table 310 is a table that -stores maintenance information regarding the facility/equipment 10, and has a notification date and time, a model, an equipment number, and a failure cause part as shown in Fig. 5.

The notification date and time is a field for storing the date and time when the failure occurrence is reported. The model is a field for storing an identifier indicating the type of equipment that has failed. The equipment number is a field for storing the number of equipment that has failed. The failure cause part is a field for storing a part determined to be the cause of the equipment failure at the time of maintenance.

The failure history data table 320 is a table in which the information of the failure sensor data table 300 and the information of the maintenance history data table 310 are merged, and has fields of notification date and time, model, equipment number, sensor A, ..., sensor X, and failure cause part as shown in Fig. 6.

The notification date and time, the model, the equipment number, the sensor A, ..., and the sensor X are fields corresponding to the notification date and time, the model, the equipment number, the sensor A, ..., and the sensor X in the failure sensor data table 300. The failure- cause part is a field corresponding to the failure cause part in the maintenance history data table 310.

The diagnostic model table 330 is a table that stores information on the learning model of failure diagnosis, and has fields of model and diagnostic model storage destination as shown in Fig. 7.

The model is a field for storing a model that is a failure diagnosis target. The diagnostic model storage destination is a field for storing the storage destination of a learning model corresponding to the model.

The rare case data table 340 is a table that stores information on rare cases (cases of failures determined to occur rarely, and accordingly the accumulation of data on the failures is small), and has fields of model, failure cause part, sensor A, ..., and sensor X as shown in Fig. 8.

The model is a field for storing a model that is a target at the time of failure of the rare case. The failure cause part is a field for storing a failure cause part considered to be the cause of the failure relevant to the model at the time of failure of the rare case. The sensor A, ..., and the sensor X are fields for storing the respective sensor data values at the time of rare case.

The model accuracy data table 350 is a table that stores information on the diagnostic accuracy of failure diagnosis, and has fields of model, the number of cases, frequency of occurrence, precision, and recall as shown in Fig. 9. The number of cases, the frequency of occurrence, the precision, and the recall are repeatedly described for each part of the model.

As the diagnostic accuracy of learning of the present embodiment, precision and recall are adopted.

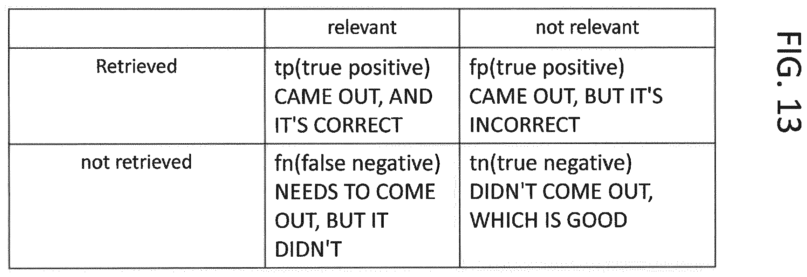

The precision is the ratio of what is really correct in the diagnosis result of the system, and is an index indicating the accuracy of the failure diagnosis. Using the symbols in the table of Fig. 13, the precision is expressed by tp/(tp + fp). The recall is the ratio of things that have actually come out to things that should come out as diagnosis results, and is an index regarding the completeness of failure diagnosis. Using the symbols in the table of Fig. 13, the recall is expressed by tp/(tp + fn).

The number of cases is a field for storing the number of cases in which a failure has occurred in the model during the learning period. The frequency of occurrence (failure cause part) is a field for storing the frequency of failure occurrence for the failure cause part (an arm, a cooling unit, a printed board, or the like) of the model within a predetermined period. The precision (failure cause part) is a field for storing the precision for the failure cause part of the model. The recall (failure cause part) is a field for storing the recall for the failure cause part of the model.

The machine learning diagnosis result table 360 is a table that stores the results of failure diagnosis by machine learning, and has fields of notification date and time, equipment number, sensor A, ..., sensor X, estimated part i (i = 1, ...), and estimated probability i (i = 1, ...) as shown in Fig. 10.

The notification date and time is a field for storing the date and time when the failure occurrence is reported. The model is a field for storing an identifier indicating the type of equipment that has failed. The sensor A, ..., and the sensor X are fields for storing the respective sensor data values at the time of failure. The estimated part i is a field for storing a character string indicating a part of the equipment under failure diagnosis by machine learning. The estimated probability i is a field for storing the estimated probability of failure diagnosis for the part stored in the estimated part i.

The rare case diagnosis result table 370 is a table for storing information on the rare case, and is a diagram showing examples of notification date and time, equipment number, sensor A, ..., sensor X, and, match rate (part) as shown in Fig. 11. The notification date and time is a field for storing the date and time when the failure occurrence in the rare case is reported. The equipment number is a field for storing the number of equipment that has failed in the rare case. The sensor A, ..., and the sensor X are fields for storing the respective sensor data values at the time of failure in the rare case. The match rate (part) is a field for storing the sensor data match rate of a part (a printed board, a floor installation portion, ..., a connector, or the like) of the equipment. The sensor data match rate is an index (0 to 1) indicating how much sensor data at the time of failure matches sensor data of the failure cause part in the rare case accumulated in the past. For example, the sensor data match rate can be obtained by calculating how much the time for taking a certain range during a certain period matches or by calculating whether or not the number of appearances of abnormal values matches. The closer the match rate (part) is to 1, the more the sensor data at the time of failure matches the sensor data of the failure cause part in the past rare case, indicating that the part is closer to the failure cause.

The occurrence frequency table for each target equipment 380 is a table that stores the frequency of failures for each part within a certain period (for example, one year), and has fields of model, equipment number, and part (an arm, a cooling unit, ..., a printed board, or the like) as shown in Fig. 12. Here, for example, the frequency for each year is expressed by the number of past failures/statistical years.

The model is a field for storing an identifier indicating the type of equipment that has failed. The equipment number is a field for storing the number of equipment that has failed. The part is a field for storing the frequency in a period during which the part is a failure cause.

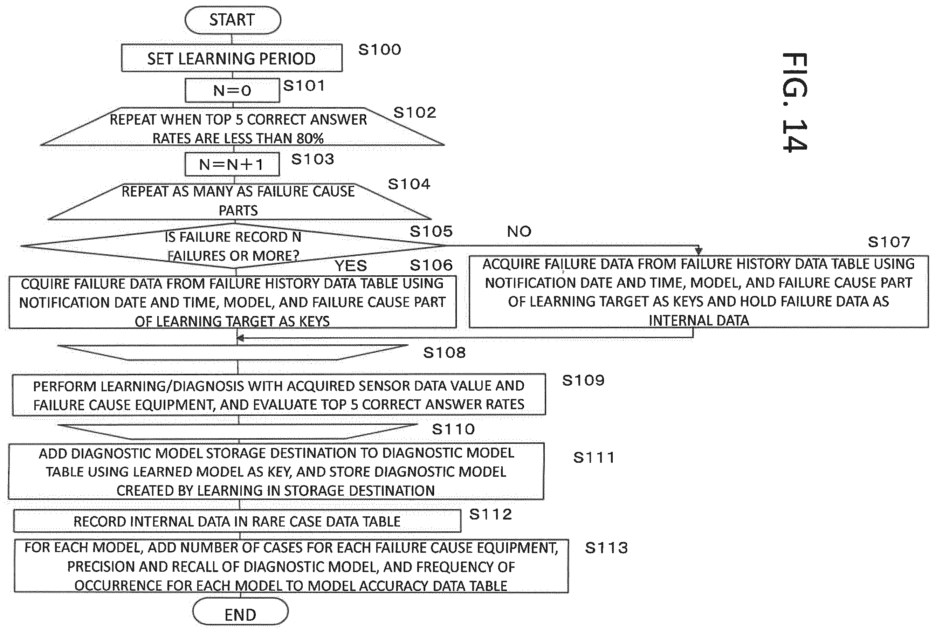

Next, a processing performed by the learning diagnosis apparatus will be described with reference to Figs. 14 to 16.

First, a learning process performed by the learning unit 210 of the learning diagnosis apparatus 200 will be described with reference to Fig. 14.

First, the learning unit 210 sets a diagnosis period for learning (S100).

Then, in order to initialize N (integer), 0 is substituted (S101). N is a counter used for determining whether or not the failure record is a rare case.

Then, when TOP 5 correct answer rates are less than 80%, the processes of S103 to S109 are repeated (S102 to S110). TOP 5 is an example, and may be changed to TOP 3, TOP 10, and the like in order to find an appropriate correct answer rate according to the purpose of learning. In addition, the standard of 80% may be another standard according to the purpose of learning.

First, N is incremented by 1 (S103).

Then, the processes of S105 to S107 are repeated as many as failure cause parts (S104 to S108).

It is determined whether or not the failure record of the failure cause part is N failures or more (S105).

When the failure record of the failure cause part is N failures or more (S105: YES), the process proceeds to S106. When the failure record of the failure cause part is not N failures or more (S105: NO), the process proceeds to S107.

When the failure record of the failure cause part is N failures or more, a record indicating failure data is acquired from the failure history data table 320 using the model, the notification date and time, and the failure cause part of the learning target as keys (S106).

When the failure record of the failure cause part is not N failures or more, a record indicating failure data is acquired from the failure history data table 320 using the model, the notification date and time, and the failure cause part of the learning target -as keys, and held as internal data (S107) .

Then, learning/diagnosis is performed on the acquired failure cause part, and the TOP 5 correct answer rates of the estimated probability are evaluated (S109).

When the correct answer rates of 80% or more are obtained as TOP 5 correct answer rates, a diagnostic model storage destination is added to the diagnostic model table 330 using the learned model as a key, and the diagnostic model created by learning is stored in the diagnostic model storage destination (S111).

The internal data held in S107 is recorded in the rare case data table 340 (S112).

For each model, the number of cases for each failure cause part, the diagnostic accuracy (precision, recall) of the diagnostic model, and the frequency of occurrence for each model are added to the model accuracy-data table 350 (S113).

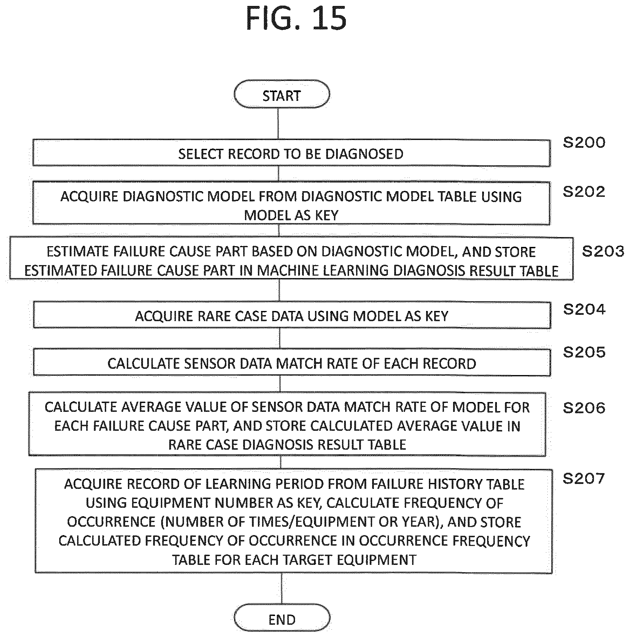

Then, a diagnostic process performed by the diagnostic unit 220 of the learning diagnosis apparatus 200 will be described with reference to Fig. 15.

First, a record to be diagnosed is selected from the failure history data table 320 (S200).

Then, with reference to the diagnostic model storage destination in the diagnostic model table 330, the diagnostic model is acquired using the model as a key (S201).

Then, the failure cause part is estimated based on the diagnostic model and stored in the machine learning diagnosis result table 360 together with the estimated probability (S202) .

Then, a record of rare case data is acquired from the rare case data table 340 using the model as a key (S203).

Then, the sensor data match rate of each record is calculated (S204).

Then, the average value of the sensor data match rate is calculated for each model and each failure cause part, and is stored in the record match rate (part) field of the rare case diagnosis result table 370 of the equipment number belonging to the model (S205).

Then, a record of the learning period is acquired from the failure history table using the equipment number as a key, and the frequency of occurrence (number of times/equipment or year) is calculated for each failure cause part and stored in the occurrence frequency table for each target equipment 380 (S206).

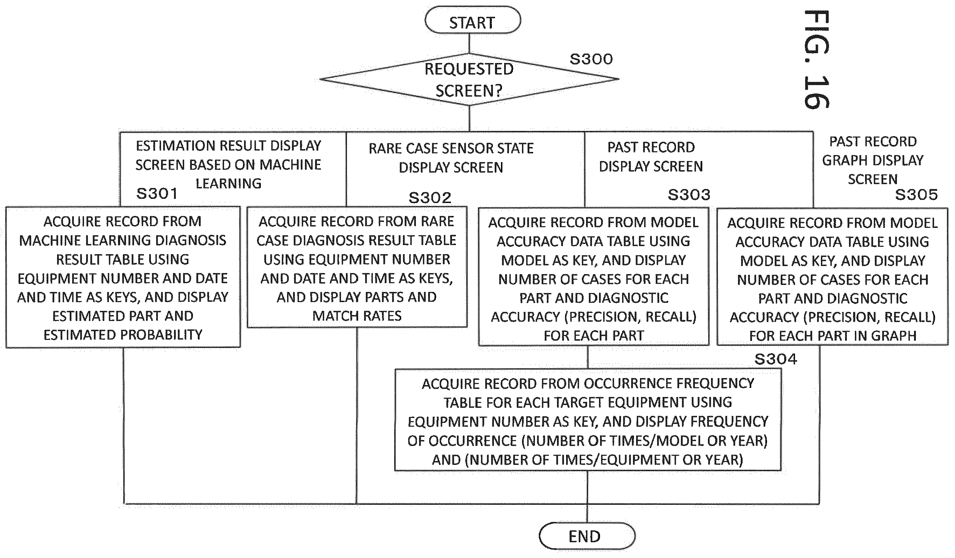

Next, a display process performed by the display unit 230 of the learning diagnosis apparatus 200 will be described with reference to Fig. 16.

When the screen requested to be displayed by the maintenance staff is an estimation result display screen based on machine learning (S300: estimation result display screen based on machine learning), a record is acquired from the machine learning diagnosis result table 360 using the equipment number and the failure notification date and time as keys, and the estimated failure part and the estimated probability are displayed (S301).

When the screen requested to be displayed by the maintenance staff is a rare case sensor state display screen (S302: rare case sensor state display screen), a record is acquired from the rare case diagnosis result table 370 using the equipment number and the failure notification date and time as keys, and TOP 5. failure cause parts and WORST 5 failure cause parts and the sensor data match rates of these parts are displayed (S302).

When the screen requested to be displayed by the maintenance staff is a past record display screen (S303: past record display screen), a record is acquired from the model accuracy data table 350 using the model as a key, and the number of cases for each part and the diagnostic accuracy (precision, recall) are displayed (S303).

Then, a record of the occurrence frequency table for each target equipment 380 is acquired using the equipment number as a key, the frequency of occurrence (number of times/equipment or year) for each equipment number is displayed, the sum of the frequencies of occurrence of the machine number of the same model is calculated, the frequency of occurrence for each model is calculated, and the frequency of occurrence (number of times/model or year) is displayed (S304).

When the screen requested to be displayed by the maintenance staff is a past record graph display screen (S303: past record graph display screen), a record is acquired from the model accuracy data table 350 using the model as a key, and the number of cases for each part and the diagnostic accuracy (precision, recall) are displayed in a graph (S305).

In addition, a specific example of the user interface of each display will be described in detail later.

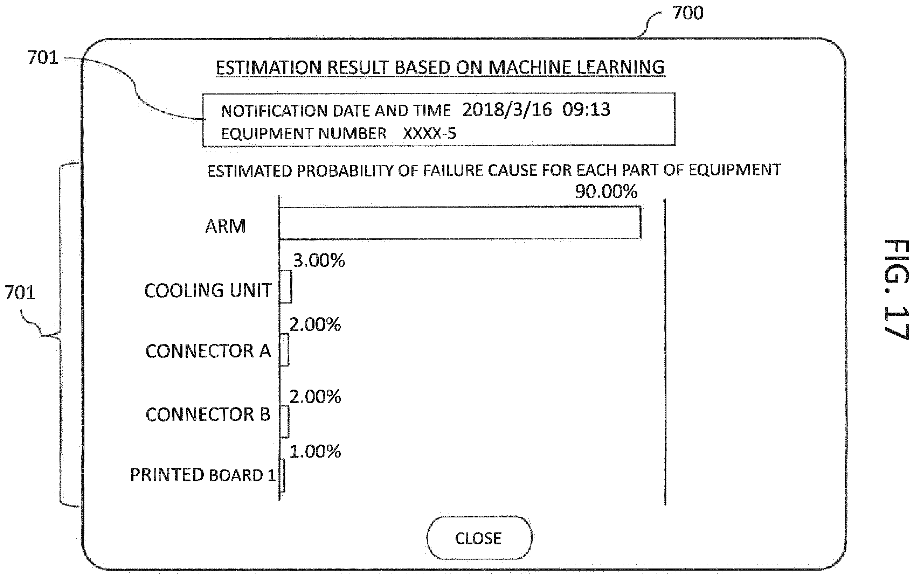

Next, the user interface of the learning diagnosis apparatus will be described with reference to Figs. 17 to 20.

An estimation result display screen 700 based on machine learning is a screen to display, as a result of learning diagnosis, the estimated probability that each part of the equipment that has failed will fail, and includes a failure information display column 701 and an estimated probability display column 702 as shown in Fig. 17.

The failure information display column 701 is a column for displaying failure information as a target of failure diagnosis. The estimated probability display column 702 is a column for displaying the estimated probability of failure of each part of the equipment that has failed in a graph.

The maintenance staff can shorten the inspection time by inspecting a failure from the upper level based on the display of the graph.

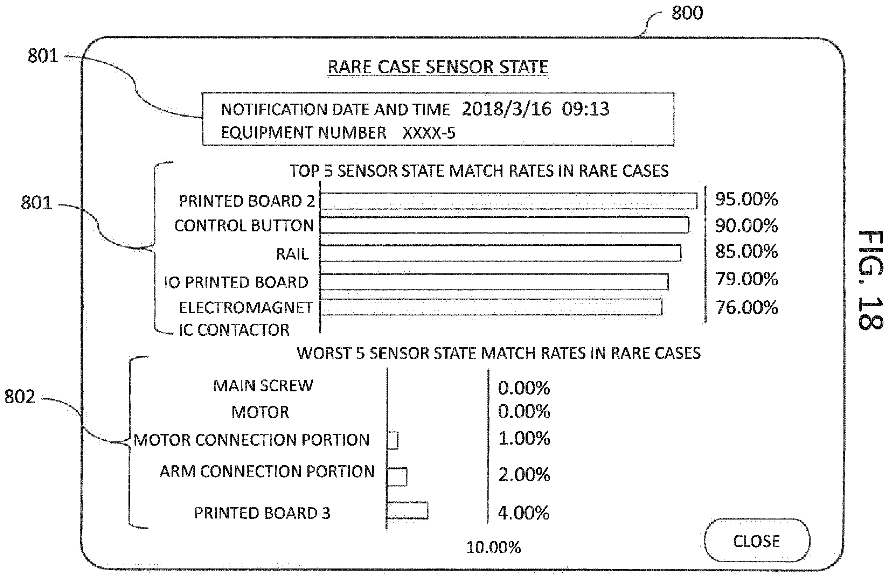

A rare case sensor state display screen 800 is a screen to display the match rate between sensor data of a current failure and sensor data in the rare case, and includes a failure information display column 801, a TOP 5 rare case sensor state match rates display column 802, and a WORST 5 rare case sensor data match rates display column 803 as shown in Fig. 18.

The failure information display column 801 is a column for displaying failure information as a target of failure diagnosis.

The TOP 5 rare case sensor state match rates display column 802 is a column for displaying, for a failure cause part for which the match rate between sensor data of a current failure and accumulated sensor data in the rare case belongs to TOP 5, the sensor data match rate as a graph.

The WORST 5 rare case sensor state match rates display column 803 is a column for displaying, for a failure cause part for which the match rate between sensor data of a current failure and accumulated sensor data in the rare case belongs to WORST 5, the sensor data match rate as a graph.

The rare case is a case where there are few past records used for learning and accordingly a learning model for meaningful diagnosis cannot be obtained or a learning model cannot be created. Even in such a rare case, by inspecting failure cause parts belonging to TOP 5 in view of the sensor data match rate, it is possible to make an inspection from a failure cause part having a relatively high possibility. Therefore, the maintenance staff can improve the inspection efficiency of the failure location. On the other hand, in terms of the sensor data match rate, failure cause parts belonging to WORST 5 are rare cases and are cases where the sensor data match rate is low. Accordingly, it can be seen that no inspection is required or the inspection should be postponed most. Therefore, since it is not necessary to inspect unnecessary parts of the equipment, the maintenance staff can improve the inspection efficiency of the failure location.

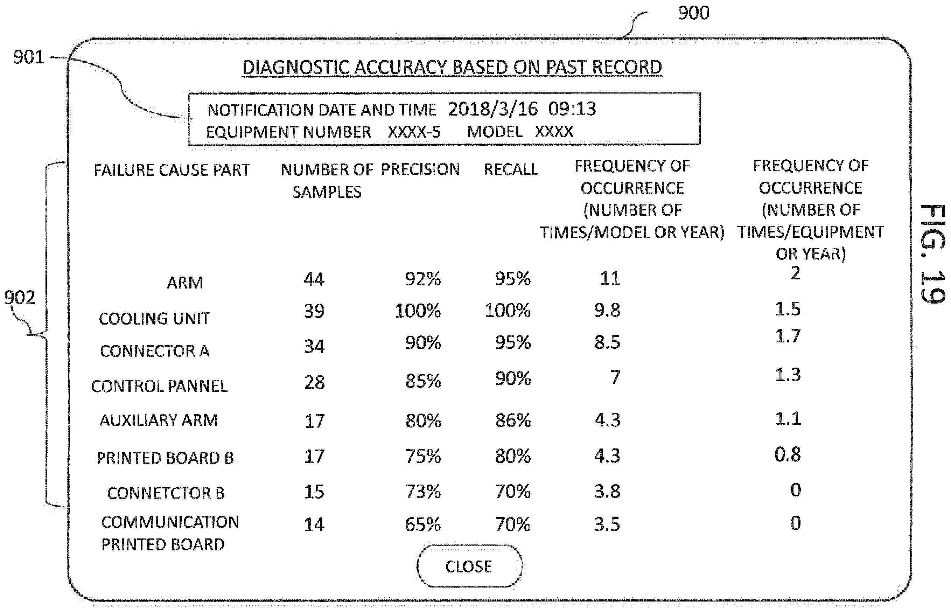

A past record display screen 900 is a screen to display information on past failure diagnosis results and diagnostic accuracy, and includes a failure information display column 901 and a past record display column 902 as shown in Fig. 19. The failure information display column 901 is a column for displaying failure information as a target of failure diagnosis. In addition, here, information on the equipment number in which the failure has occurred and the model thereof is displayed. The past record display column 902 is a column for displaying information based on the failure data learned in the past, and the number of samples, the diagnostic accuracy (precision, recall), the frequency of occurrence of failures for each model in a predetermined period, and the frequency of occurrence of failures for each target equipment in a predetermined period are displayed for each part of the equipment.

Through the past record display screen 900, the maintenance staff can check the number of samples for each part of the equipment, the diagnostic accuracy (precision, recall), and the frequency of occurrence of failures for each model and each target equipment.

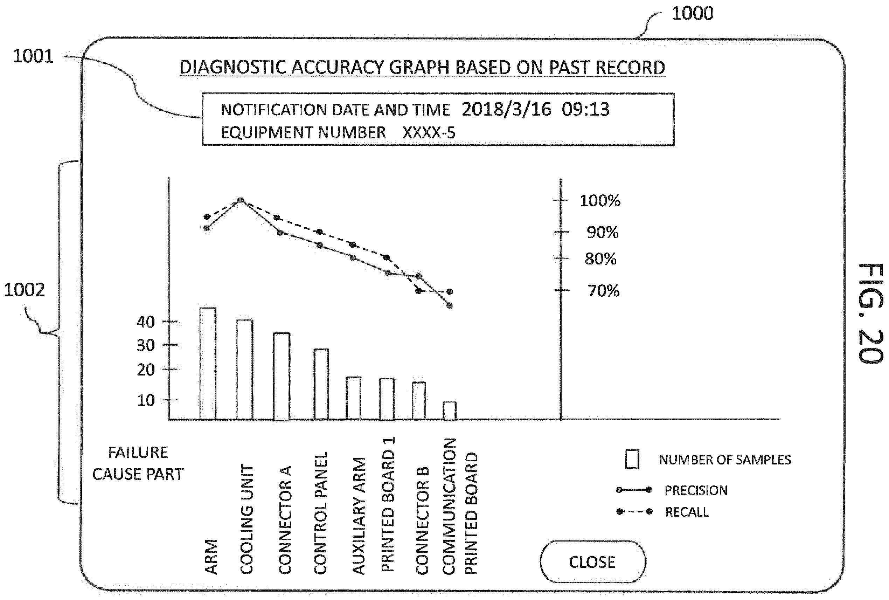

As shown in Fig. 20, a past record graph display screen 1000 is a screen to display information on the past failure diagnosis results and diagnostic accuracy in a graph format. As shown in Fig. 20, the past record graph display screen 1000 includes a failure information display column 1001 and a past record graph display column 1002. The failure information display column 1001 is a column for displaying failure information as a target of failure diagnosis. The past record graph display column 1002 is a column for displaying information based on failure data learned in the past as a graph. For each part of the equipment, the number of samples is displayed in a bar graph, and the diagnostic accuracy (precision, recall) is displayed in a line graph.

Through the past record graph display screen 1000, the maintenance staff can check the number of samples for each part of the equipment and the diagnostic accuracy (precision, recall) in a graph format.

In addition, in the present embodiment, the failure diagnosis screen of the learning diagnosis apparatus 200 is displayed on four screens such as the estimation result display screen based on machine learning in Fig. 17, the rare case sensor state information display screen shown in Fig. 18, the past record display screen shown in Fig. 19, and the past record graph display screen shown in Fig. 20. However, in order to make it easier for the maintenance staff to see the failure diagnosis screen, one failure diagnosis screen may be displayed as a screen on which information to be displayed is collected.

As described above, according to the present embodiment, the maintenance staff makes an inspection based on the information displayed on the estimation result display screen 600 based on machine learning. Therefore, since it is possible to make an inspection in order from the equipment having a high probability estimated by learning based on the data accumulated in the past, it is possible to shorten the inspection time.

In addition, the maintenance staff makes an inspection based on the information displayed on the rare case sensor state display screen 700. Therefore, when the cause of the inspection is unknown from the results of machine learning or when the diagnostic accuracy of machine learning is poor, it is possible to distinguish between equipment that does not need to be inspected and equipment that needs to be inspected among the pieces of equipment with low failure frequency, so that it is possible to shorten the inspection time.

In addition, since the maintenance staff can have a bird's-eye view of the current data level and the diagnostic accuracy from the information displayed on the past record display screen 800 and the past record graph display screen 900, the worker can determine inspection priority in consideration of the diagnostic accuracy. For example, even if the estimation probability on the estimation result display screen 600 based on machine learning is high, when the diagnostic accuracy is poor, it is possible to take measures such as giving priority to the inspection of a failure cause part in the rare case.

In addition, since it is possible to have a bird's-eye view that the number of learnings is proportional to the diagnostic accuracy, it can be expected that the inspection load of the worker can be reduced by adding more learning data. Therefore, it is possible to encourage workers to actively input failure inspection records.

### REFERENCE SIGNS LIST

- 5: Sensor
- 10: Facility/equipment
- 100: Equipment information management apparatus
- 200: Learning diagnosis apparatus
- 400: Sensor data management apparatus
- 110: Sensor data input and output unit
- 120: Maintenance history management unit
- 130: Maintenance history input and output unit
- 140: Sensor data and maintenance history merge unit
- 150: Failure history data output unit
- 160: Storage unit
- 210: Learning unit
- 220: Diagnostic unit
- 230: Display unit
- 240: Failure history data input unit
- 250: Storage unit
- 300: Failure sensor data table
- 310: Maintenance history data table
- 320: Failure history data table
- 330: Diagnostic model table
- 340: Rare case data table
- 350: Model accuracy data table
- 360: Machine learning diagnosis result table
- 370: Rare case diagnosis result table
- 380: Occurrence frequency table for each target equipment

## Claims

1. An equipment failure diagnosis support system that performs failure diagnosis based on sensor data output from a sensor that measures equipment, comprising:
a learning diagnosis apparatus,
wherein the learning diagnosis apparatus holds a failure history table that stores equipment in which a failure has occurred, sensor data, and a failure cause part of the equipment and a rare case data table that stores sensor data for each model and each part in a rare case,
the learning diagnosis apparatus includes a learning unit that performs learning from past data to create a diagnostic model,a diagnostic unit that performs failure diagnosis based on the diagnostic model created by the learning unit, and a display unit that displays a diagnosis result of the diagnostic unit,
the learning unit performs learning from data stored in the failure history table to create a diagnostic model, and stores a model, a failure cause part, and sensor data of the equipment in the rare case data table when the number of cases of the failure cause part of the equipment is less than a predetermined number from the failure history table,
the diagnostic unit calculates, for each part of the equipment in which the failure has occurred, an estimated probability of causing a failure based on the diagnostic model created by the learning unit, and calculates a sensor data match rate between sensor data of the equipment in which the failure has occurred and past sensor data of the model of the equipment based on the rare case data table, and
the display unit displays the failure cause part of the equipment in which the failure has occurred diagnosed by the diagnostic unit and the estimated probability, and displays the calculated sensor data match rate for each part of the equipment in which the failure has occurred.

2. The equipment failure diagnosis support system according to claim 1,
wherein display of the sensor data match rate is performed up to upper n (n is an integer) sensor data match rates and lower m (m is an integer) sensor data match rates.

3. An equipment failure diagnosis support system that performs failure diagnosis based on sensor data output from a sensor that measures equipment, comprising:
a learning diagnosis apparatus,
wherein the learning diagnosis apparatus holds a failure history table that stores equipment in which a failure has occurred, sensor data, and a failure cause part of the equipment and a model accuracy data table that stores the number of failures and diagnostic accuracy for each model and each part,
the learning diagnosis apparatus includes a learning unit that performs learning from past data to create a diagnostic model, a diagnostic unit that performs failure diagnosis based on the diagnostic model created by the learning unit, and a display unit that displays a diagnosis result of the diagnostic unit,
the learning unit performs learning from data stored in the failure history table to create a diagnostic model, and calculates the number of failures and diagnostic accuracy for a failure cause for each part of the equipment in which the failure has occurred and stores the calculated number of failures and diagnostic accuracy in the model accuracy data table,
the diagnostic unit calculates, for each part of the equipment in which the failure has occurred, an estimated probability of causing a failure based on the diagnostic model created by the learning unit, and
the display unit displays the failure cause part of the equipment in which the failure has occurred diagnosed by the diagnostic unit and the estimated probability, and displays the number of failures and the diagnostic accuracy for the failure cause, for each part of a model of the equipment in which the failure has occurred, with reference to the model accuracy data table.

4. The equipment failure diagnosis support system according to claim 3,
wherein the diagnostic accuracy is a precision and a recall.

5. The. equipment -failure diagnosis support system according to claim 3,
wherein the number of failures and the diagnostic accuracy for the failure cause are displayed numerically.

6. The equipment failure diagnosis support system according to claim 3,
wherein the number of failures and the diagnostic accuracy for the failure cause are displayed in a graph.

7. The equipment failure diagnosis support system according to claim 3,
wherein a frequency of occurrence of failures for each model in a predetermined period and a frequency of occurrence of failures for each equipment in which the failure has occurred are displayed for each part of the equipment in which the failure has occurred.

8. An equipment failure diagnosis support method for performing failure diagnosis based on sensor data output from a sensor that measures equipment, the method comprising:
a step in which a learning diagnosis apparatus holds a failure history table that stores equipment in which a failure has occurred, sensor data, and a failure cause part of the equipment, a rare case data table that stores sensor data for each model and each part in a rare case, and a model accuracy data table that stores the number of failures and diagnostic accuracy for each model and each part and the learning diagnosis apparatus performs learning from data stored in the failure history table to create a diagnostic model;
a step in which the learning diagnosis apparatus calculates the number of failures and diagnostic accuracy for a failure cause for each part of the equipment in which the failure has occurred and stores the calculated number of failures and diagnostic accuracy in the model accuracy data table;
a step in which the learning diagnosis apparatus calculates, for each part of the equipment in which the failure has occurred, an estimated probability of causing a failure based on the created diagnostic model;
a step in which the learning diagnosis apparatus stores a model, a failure cause part, and sensor data of the equipment in the rare case data table when the number of cases of the failure cause part of the equipment is less than a predetermined number from the failure history table;
a step in which the learning diagnosis apparatus calculates a sensor data match rate between sensor data of the equipment in which the failure has occurred and past sensor data of the model of the equipment based on the rare case data table;
a step in which the learning diagnosis apparatus displays the diagnosed failure cause part of the equipment in which the failure has occurred and the estimated probability;
a step in which the learning diagnosis apparatus displays the calculated sensor data match rate for each part of the equipment in which the failure has occurred; and
a step in which the learning diagnosis apparatus displays the number of failures and the diagnostic accuracy for the failure cause, for each part of the model of the equipment in which the failure has occurred, with reference to the model accuracy data table.
